# EUROPÄISCHE PATENTANMELDUNG

(11) **EP 2 595 351 A1**
(43) Veröffentlichungstag der Anmeldung: **22.05.2013**
(21) Anmeldenummer: 11189130.5
(22) Anmeldetag: 15.11.2011
(51) Int. Cl.: H04L 12/861, G06F 13/38

(54) **Vorrichtung zur Verwendung in einem digitalen Übertragungssystem, digitales Übertragungssystem und Verfahren zur Datenübertragung**

(71) Anmelder: Eaton Industries GmbH, 53115 Bonn (DE)
(72) Erfinder: Jagusch, Lothar, 53123 Bonn (DE)
(74) Vertreter: Leadbetter, Benedict

(57) **Zusammenfassung**

Verfahren zur Datenübertragung in einem digitalen Übertragungssystem mit mindestens zwei Teilnehmern, wobei die mindestens zwei Teilnehmer über eine Datenverbindung verbunden werden; Teilnehmer zur Verwendung in einem digitalen Übertragungssystem mit mindestens einem weiteren Teilnehmer, insbesondere ein Schaltgerät und/oder ein Bedien-, Steuerungs- oder Vernetzungsgerät; sowie digitales Übertragungssystem mit mindestens zwei Teilnehmern.

## Beschreibung

Die Erfindung betrifft ein Verfahren zur Datenübertragung in einem digitalen Übertragungssystem mit mindestens zwei Teilnehmern, wobei die mindestens zwei Teilnehmer über eine Datenverbindung verbunden werden, einen Teilnehmer zur Verwendung in einem digitalen Übertragungssystem mit mindestens einem weiteren Teilnehmer, insbesondere ein Schaltgerät und/oder ein Bedien-, Steuerungs- oder Vernetzungsgerät; sowie ein digitales Übertragungssystem mit mindestens zwei Teilnehmern.

Die DE 10 2005 003 011 A1 zeigt ein Beispiel eines digitalen Übertragungssystems mit einer Punkt-zu-Punkt Verbindung. In einem digitalen Übertragungssystem, von dem hier ausgegangen wird, umfasst einerseits als Teilnehmer ein Schaltgerät, wie beispielsweise einen Leistungsschalter oder einen Motorschutzschalter, und andererseits ein Kontrollgerät, wie beispielsweise ein Gateway, eine Bedieneinheit oder ein PC mit Interface und entsprechender Software. Der Vielzahl von verschiedenen Schaltgeräten, die als Teilnehmer verwendet werden können, ist gemein, dass sie den Stromfluss und eventuell weitere physikalische Größen erfassen, sowie gegebenenfalls Schaltvorgänge ausführen. Doch die konkreten Datenarten, die von den unterschiedlichen Schaltgeräten und auch von den Kontrollgeräten in Form von physikalischen Größen und/oder Schaltbefehlen verarbeitet werden, unterscheiden sich erheblich. Die Teilnehmer weisen dazu in der Regel Prozessormittel zur Verarbeitung von Protokollstapeln auf, welche individuell an die speziellen Gegebenheiten jedes Teilnehmers angepasst sind. Derart individuell aufgebaute Punkt-zu-Punkt Verbindungen für jeden Teilnehmer erlauben eine optimale Kommunikation, sind jedoch ausgesprochen aufwändig im Aufbau und bei Änderungen. Um eine höhere Kompatibilität der Teilnehmer zur Verwendung in einem digitalen Übertragungssystem zu erreichen, bzw. den Aufwand zur Anpassung der Teilnehmer eines digitalen Übertragungssystems zu verringern, kann die Datenübertragung dahingehend vereinfacht werden, dass alle Teilnehmer eine einheitliche Kommunikationsschnittstelle, also einen gemeinsamen Protokollstapel erhalten, wobei die Kommunikationsschnittstelle durch einen modularen Aufbau des Protokollstapels an die Datenstruktur des jeweiligen Teilnehmers zwar grundlegend anpassbar ist, aber eine individuell angepasste Verarbeitung der spezifischen Daten erfolgt nicht.

Eine Aufgabe der Erfindung besteht darin, die Kommunikation bei einer vereinheitlichten Kommunikationsschnittstelle zu optimieren.

Die Aufgabe wird durch die Gegenstände der unabhängigen Ansprüche gelöst. Bevorzugte Ausführungsformen und vorteilhafte Weiterbildungen sind den Unteransprüchen zu entnehmen.

Ein erfindungsgemäßes Verfahren zur Datenübertragung in einem digitalen Übertragungssystem mit mindestens zwei Teilnehmern sieht vor, dass mindestens zwei Teilnehmer über eine Datenverbindung verbunden werden. Ein Protokollstapel wird durch Prozessormittel der Teilnehmer verarbeitet. Die nachfolgende Beschreibung von Protokollstapeln bezieht sich auf ein OSI-Referenzmodell (Open Systems Interconnection Reference Model), ein dem Fachmann bekanntes Schichtenmodell, das als Grundlage von Kommunikationsprotokollen dient. Mittels einer Kommunikations-Aufruf-Routine in einer Sitzungsschicht des Protokollstapels wird der Austausch der Daten zwischen den mindestens zwei Teilnehmern über die Datenverbindung organisiert. Eine Schreib-Lese-Routine zum Befüllen und/oder Auslesen der Pufferspeicher in einer Transportschicht des Protokollstapels ordnet die Daten einer Abfolge von Telegrammen zu. Erfindungsgemäß werden dabei in den Telegrammen mindestens zwei Vorrangebenen für den Transport von Daten unterschiedlicher Vorrangstufen definiert.

Durch die Definition unterschiedlicher Vorrangstufen besteht vorteilhaft die Möglichkeit, bestimmte Daten mit Vorrang vor anderen Daten zu übertragen. Damit wird das Verfahren den Gegebenheiten bei der Übertragung von Daten besser gerecht, da je nach Teilnehmer andere Daten als wesentlich zu betrachten sind.

Ein bevorzugtes Ausführungsbeispiel des Verfahrens sieht vor, dass jedes Telegramm in eine Mehrzahl von Segmenten unterteilt wird, wobei mindestens ein Statusdaten-Segment für Daten mit höchster Vorrangstufe definiert wird und mindestens ein Datenfeld-Segment für Daten anderer Vorrangstufen definiert wird. Das bedeutet, dass die Daten mit höchster Vorrangstufe in jedes Datentelegramm geschrieben werden und somit bei jeder Übertragung aktualisiert werden, da das Statusdaten-Segment diesen Daten der höchsten Vorrangstufe vorbehalten ist.

Ein weiteres bevorzugtes Ausführungsbeispiel des Verfahrens sieht vor, dass zyklisch zu übertragende Daten für die Übertragung in mindestens ein erstes Datenfeld-Segment und ein zweites Datenfeld-Segment je Telegramm eingetragen werden. Die Daten werden dem ersten Datenfeld-Segment und/oder dem zweiten Datenfeld-Segment insbesondere nach einem Round-Robin-Verfahren zugeordnet. Die zyklisch zu übertragenden Daten bilden eine zweite Vorrangstufe unter denjenigen Daten, die in das Statusdaten-Segment geschrieben werden. Die zyklischen Daten werden laufend übertragen, jedoch nicht vollständig mit jedem Datentelegramm. Wenn der Speicherplatz der Datenfeld-Segmente nicht für alle zyklischen Daten ausreicht, so werden diese über mehrere Telegramme verteilt nach dem angesprochenen Round-Robin Verfahren gesendet.

Ein weiteres bevorzugtes Ausführungsbeispiel des Verfahrens sieht vor, dass mindestens einem Datenfeld-Segment ein Hinweissegment zugeordnet wird, wobei durch das Hinweissegment eine Information darüber übertragen wird, ob eine Anforderung azyklischer Daten vorliegt und/oder ob das zugeordnete Datenfeld-Segment angeforderte azyklische Daten beinhaltet. Als azyklische Daten wird im Sinne der Erfindung eine dritte Vorrangebene von Daten unter den zyklischen Daten bezeichnet, die nicht laufend, sondern lediglich auf Anforderung übertragen werden. Die azyklischen Daten werden vorteilhaft ebenso in die Datenfeld-Segmente geschrieben, wie die zyklischen Daten. Das Hinweissegment enthält entsprechend die Information, um welche Art von Daten, zyklisch oder azyklisch, es sich handelt. In der Gegenrichtung dient das Hinweissegment vorteilhaft gleichzeitig dazu, die Anforderung der azyklischen Daten an den Teilnehmer zu liefern.

Weiterhin bevorzugt wird mit jedem Datenfeld-Segment ein Datenobjekt übertragen, wobei als Datenobjekt jeweils Daten eines bestimmten Typs zusammengefasst werden. Die Datenobjekte sind insbesondere in einer Schicht des Protokollstapels oberhalb der Kommunikations-Aufruf-Routine definiert. Dies dient dazu, einen vereinheitlichten Protokollstapel an den jeweiligen Teilnehmer anpassen zu können, indem die Art der Daten, welche dieser liefert, hier aus der Gesamtheit von definierten Datenobjekten ausgewählt werden. Durch die Prozessormittel der mindestens zwei Teilnehmer werden bevorzugt identische Protokollstapel verarbeitet, mit Ausnahme einer Konfiguration des Datensatzes der in dem Gerät verwendeten Objekte, welche in einem Konfigurationsschritt in Abhängigkeit von Eigenschaften des jeweiligen Teilnehmers durchgeführt wird.

Ein weiterer Gegenstand der Erfindung ist ein Teilnehmer zur Verwendung in einem digitalen Übertragungssystem mit mindestens einem weiteren Teilnehmer, welches vorzugsweise nach dem zuvor beschriebenen Verfahren arbeitet. Erfindungsgemäß sind Kommunikationsmittel zum Verbinden des Teilnehmers mit dem mindestens einen weiteren Teilnehmer über eine Datenverbindung vorgesehen, sowie Pufferspeicher zur Speicherung von Daten und Prozessormittel zur Verarbeitung eines Protokollstapels, wobei eine Kommunikations-Aufruf-Routine eine Sitzungsschicht des Protokollstapels zum organisierten Austausch der Daten zwischen dem Teilnehmer und dem mindestens einen weiteren Teilnehmer über die Datenverbindung bildet und eine Schreib-Lese-Routine zum Befüllen und/oder Auslesen der Pufferspeicher in einer Transportschicht des Protokollstapels vorgesehen ist, wobei die Schreib-Lese-Routine die Daten einer Abfolge von Telegrammen zuordnet und wobei jedes Telegramm mindestens zwei Vorrangebenen für Daten unterschiedlicher Vorrangstufen aufweist.

Durch die unterschiedlichen Vorrangstufen besteht vorteilhaft die Möglichkeit, dass der Teilnehmer bestimmte Daten mit Vorrang vor anderen Daten übertragen kann. Damit kann den Gegebenheiten des jeweiligen Teilnehmers bei der Übertragung von Daten besser Rechnung getragen werden, da je nach Teilnehmer andere Daten als wesentlich zu betrachten sind.

Gemäß einer bevorzugten Ausführungsform ist vorgesehen, dass jedes Telegramm in eine Mehrzahl von Segmenten unterteilt ist, wobei mindestens ein Statusdaten-Segment für Daten mit höchster Vorrangstufe vorgesehen ist und mindestens ein Datenfeld-Segment für Daten anderer Vorrangstufen vorgesehen ist. Jedes Datenfeld-Segment ist vorzugsweise zur Übertragung eines Datenobjekts vorgesehen, wobei in einem Datenobjekt jeweils Daten eines bestimmten Typs zusammengefasst sind. Eine Definition der Datenobjekte bildet vorzugsweise eine Schicht des Protokollstapels oberhalb der Kommunikations-Aufruf-Routine.

Gemäß einer weiteren bevorzugten Ausführungsform ist vorgesehen, dass mindestens ein erstes Datenfeld-Segment und ein zweites Datenfeld-Segment je Telegramm für die Übertragung zyklisch zu übertragender Daten vorgesehen sind. Eine Zuordnung der Daten zu dem ersten Datenfeld-Segment und/oder zu dem zweiten Datenfeld-Segment erfolgt vorzugsweise nach einem Round-Robin-Verfahren.

Gemäß einer weiteren bevorzugten Ausführungsform ist vorgesehen, dass mindestens einem Datenfeld-Segment ein Hinweissegment zugeordnet ist, wobei das Hinweissegment zur Übertragung einer Information darüber vorgesehen ist, ob eine Anforderung azyklischer Daten vorliegt und/oder ob das zugeordnete Datenfeld-Segment angeforderte azyklische Daten beinhaltet.

Bei einem digitalen Übertragungssystem mit mindestens zwei Teilnehmern, das ebenfalls Gegenstand der Erfindung ist, verarbeiten die Prozessormittel der mindestens zwei Teilnehmer identische Protokollstapel, mit Ausnahme einer Konfiguration, welche in Abhängigkeit von Eigenschaften des Teilnehmers durchführbar ist. Die Konfiguration umfasst insbesondere eine Definition von Datenobjekten, welche von dem Teilnehmer gesendet werden.

Nachfolgend wird die Erfindung anhand eines Ausführungsbeispiels mit Bezug auf die Zeichnungen näher erläutert. Die Ausführungen beziehen sich auf das erfindungsgemäße Verfahren ebenso, wie auf den erfindungsgemäßen Teilnehmer zur Verwendung in einem digitalen Übertragungssystem mit mindestens einem weiteren Teilnehmer und das digitale Übertragungssystem mit mindestens zwei Teilnehmern.

Es zeigen
Figur 1 ein Schema einer möglichen Systemstruktur zur Anwendung des erfindungsgemäßen Verfahrens;
Figur 2 ein Diagramm zur Verdeutlichung eines Telegramm-Aufbaus;
Figur 3 ein Diagramm zur Verdeutlichung eines Daten-Objekts;
Figur 4 ein Punkt-zu-Punkt Protokollstapel entsprechend dem erfindungsgemäßen Verfahren in Bezug zu einem OSI-Referenzmodell;
Figur 5 einen Teil der Struktur aus Figur 1 in einer detaillierteren schematischen Darstellung;
Figuren 6 bis 8 drei Fallbeispiele für die Kommunikation zwischen zwei Teilnehmern.

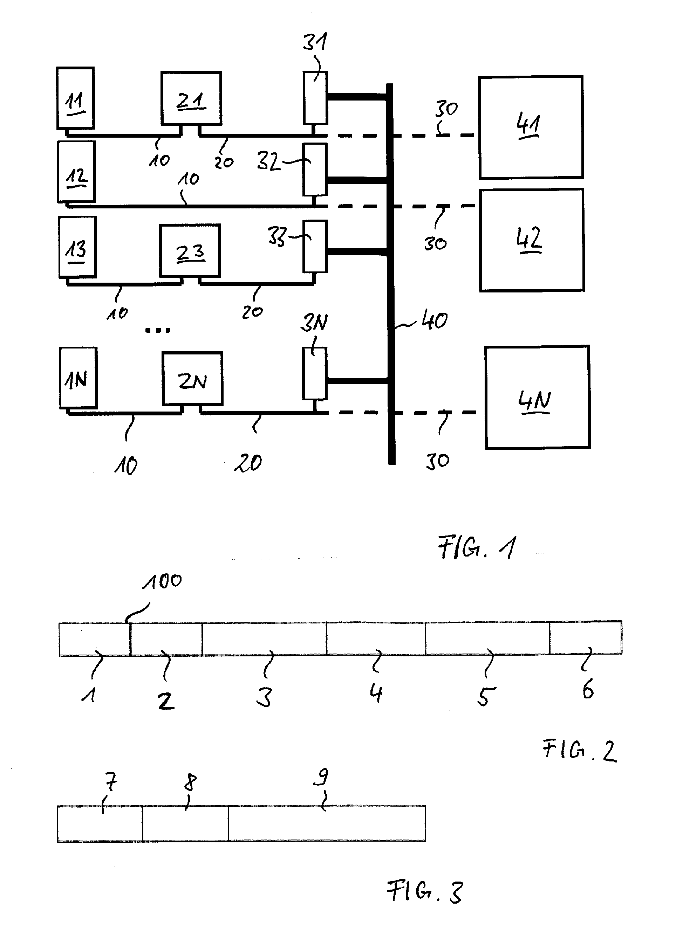

Bei dem hier mit Bezug auf die Figuren 1 bis 8 beschriebenen Ausführungsbeispiel des erfindungsgemäßen Verfahrens und des erfindungsgemäßen digitalen Übertragungssystems handelt es sich um ein Kommunikationssystem, das für unterschiedliche Schaltgeräte genutzt werden kann. Das System ist so ausgelegt, dass es für diese Geräte eine optimale Übertragung der vorhandenen Daten ermöglicht. Gleichzeitig ist es einfach an die Erfordernisse der einzelnen Geräte anpassbar.

Das Verfahren geht von einer in Figur 1 schematisch dargestellten Systemstruktur aus. Auf der linken Seite der Darstellung befindet sich eine unbegrenzte Anzahl von Schaltgeräten 11, 12, 13 bis 1N, wobei 1N das N-te Schaltgerät bezeichnet. Den unterschiedlichen Schaltgeräten, wie beispielsweise Leistungsschaltern oder Motorschutzschaltern ist gemein, dass sie die den Stromfluss und evtl. weitere physikalische Größen erfassen und gegebenenfalls Schaltvorgänge ausführen. Sie können jeweils entweder direkt über eine erste Verbindung 10 oder über eine zwischengeschaltete Display- oder Bedien-Einheit 21, 23 bis 2N und eine zweite Verbindung 20 mit einem Feldbus-Gateway 31, 32, 33 bis 3N gekoppelt werden, das die Busverbindung 40 zu einem Feldbus-Master (nicht dargestellt) herstellt. Weiterhin ist auch der Anschluss an jeweils einen PC 41, 42 bis 4N mit entsprechender Software möglich, beispielsweise über eine abgezweigte Verbindung 30, und zwar entweder am Gerät 12 selbst oder auch am Display 21, 2N. Je nach Ausführung könnte dieser Anschluss 30 zusätzlich oder an Stelle der Verbindung zum Gateway 31, 32, 3N erfolgen.

Geräte, die in ein derartiges System eingebunden werden können, sind beispielsweise Schaltgeräte, nämlich offene oder kompakte Leistungsschalter, Motorstarter, Motoschutzschalter, Motorschutzsysteme, Softstarter und Frequenz-Umrichter, sowie Bedien-, Steuerungs- und Vernetzungsgeräte, wie Display- und Bedien-Einheiten, Feldbus-Gateways und PCs mit entsprechender Software, wobei die Liste durch weitere Geräte ergänzt werden könnte.

Mit Bezug auf Figur 2 wird nachfolgend auf das Datentelegramm 100 eingegangen. Die Geräte, die mit dem erfindungsgemäßen Verfahren verbunden werden, weisen in der Regel unterschiedliche Arten von Daten auf. Um dem gerecht zu werden und eine möglichst effektive Übertragung zu erreichen, wird das Datentelegramm 100 zur Übertragung von Informationen in mehrere Segmente 1 bis 6 unterteilt. Ein Identifizierungssegment 1 enthält eine unverwechselbare Kennung des Telegramms, beispielsweise eine fortlaufende Nummerierung. Ein Statusdaten-Segment 2 beinhaltet eine Übersicht über den Zustand des Geräts bzw. der angeschlossenen Lasten. Hier werden beispielsweise Alarmzustände angezeigt, ohne dabei aber konkreten Werte anzugeben. Die Statusdaten werden typischerweise am schnellsten aktualisiert, beispielsweise etwa alle 15 bis 25 Millisekunden und dienen im Allgemeinen zur Ablaufsteuerung in übergeordneten Systemen, wie einer speicherprogrammierbaren Steuerung (SPS) oder einem Prozessleitsystem.

Ein erstes Datenfeld 3 und ein zweites Datenfeld 5 sind zur Aufnahme von Daten, die zyklisch übertragen werden, wie z.B. Messwerte, Zeitinformationen und ähnliches vorgesehen. Diese Daten sind in ihrer Bedeutung unterhalb der Statusdaten angesiedelt und werden dementsprechend weniger häufig aktualisiert, typischerweise etwa alle 50 bis 200 Millisekunden. Jedes der beiden Datenfelder 3, 5 überträgt ein Datenobjekt (siehe Figur 3), in dem gleichartige Daten zusammengefasst sind. Beispielsweise könnten alle Effektivströme oder Phasenspannungen zu jeweils einem Objekt gebündelt werden. Geräte, die mehr als zwei Datenobjekte zyklisch übertragen, wechseln den Inhalt der Datenfelder 3, 5 in jedem Übertragungszyklus. Bei einem Gerät mit fünf Objekten A, B, C, D, E bedeutet das beispielsweise, dass im ersten Zyklus die Objekte A und B, im zweiten Zyklus die Objekte C und D und im dritten Zyklus die Objekte E und erneut A übertragen werden, was auch als Round-Robin-Verfahren bezeichnet wird.

Mit einem Hinweisdatensegment 4 wird die Möglichkeit geschaffen, gezielt Gerätedaten abzufragen. Dies ist insbesondere für Daten wichtig, die nicht zyklisch übertragen werden sollen, wie z.B. Identifikationsdaten des Geräts oder der Inhalt eines Ereignisspeichers. Diese Daten werden nicht ständig benötigt, sondern bei Bedarf explizit angefordert. Die Anforderung (REQuest) bzw. die Antwort (RESponse) darauf werden in dem auch als REQ/RES-Feld bezeichneten Hinweisdatensegment 4 gekennzeichnet. Dieses Feld 4 enthält aber keinerlei Daten, sondern nur den Hinweis, dass eine Anforderung bzw. Antwort vorliegt. Für die eigentlichen Daten wird im Bedarfsfall das Datenfeld 5 benutzt.

Ein Prüfsummen-Segment 6 enthält beispielsweise eine CRC-16 Checksumme über den Telegramminhalt und dient somit der Absicherung der gesendeten Daten. Durch diesen Telegrammaufbau ist gewährleistet, dass alle Daten entsprechend ihrer Relevanz übertragen werden. Statusdaten als wichtigste Information kommen so schnell, wie das Gerät selbst sie liefern kann. Im gleichen Rhythmus werden auch die zyklischen Daten transportiert, wobei hier aber durch das Round-Robin-Verfahren größere Updatezeiten zustande kommen. Als dritte Stufe können darüber hinaus bei Bedarf bestimmte Daten gezielt angefordert bzw. übergeben werden. Alle Daten aus den Datenfeldern 3, 5 werden zu Datenobjekten gemäß Figur 3 zusammengefasst. Diese Objekte bestehen jeweils aus einem Obj ektheader 7, 8, der die Art der der Daten bezeichnet, sowie den eigentlichen Daten 9. Der Objektheader umfasst ein Feld 7 für eine Klassifizierung der Daten und ein Feld 8 für eine Nummerierung zur Unterscheidung von Daten der gleichen Klasse. In dem Datenfeld 9 stehen beispielsweise 24 Byte für Daten zur Verfügung. Die Objekt-Definitionen werden einheitlich für das gesamte System getroffen. Praktisch bedeutet das, dass eine einmal erstellte Datei mit den Objekt-Definitionen bei allen Geräten im System verwendet wird. Welche Objekte aus diesem Pool dann tatsächlich verwendet werden kann, allerdings von Gerät zu Gerät unterschiedlich sein. In jedem Fall werden durch die Verwendung eines Objekts die entsprechenden Variablen automatisch angelegt. Alle nicht verwendeten Variablen werden auch bei der Kompilierung nicht berücksichtigt und belegen somit keine Ressourcen im Mikrokontroller. Dieses Verfahren bietet den Vorteil, dass die größtmögliche Kompatibilität zwischen den Geräten erreicht wird. Da alle Geräte auf die gleiche Datenbasis aufsetzen, sind Fehlinterpretationen nahezu ausgeschlossen. Sollte ein Objekt von einem der Teilnehmer nicht unterstützt werden, wird es schlimmstenfalls nicht ausgewertet oder weitergeleitet. Da aber trotzdem die formalen Anforderungen des Übertragungsprotokolls erfüllt werden, wird dies keine weiteren Auswirkungen, wie beispielsweise eine Zerstörung des Telegramms, Datenverlust oder Systemabsturz haben.

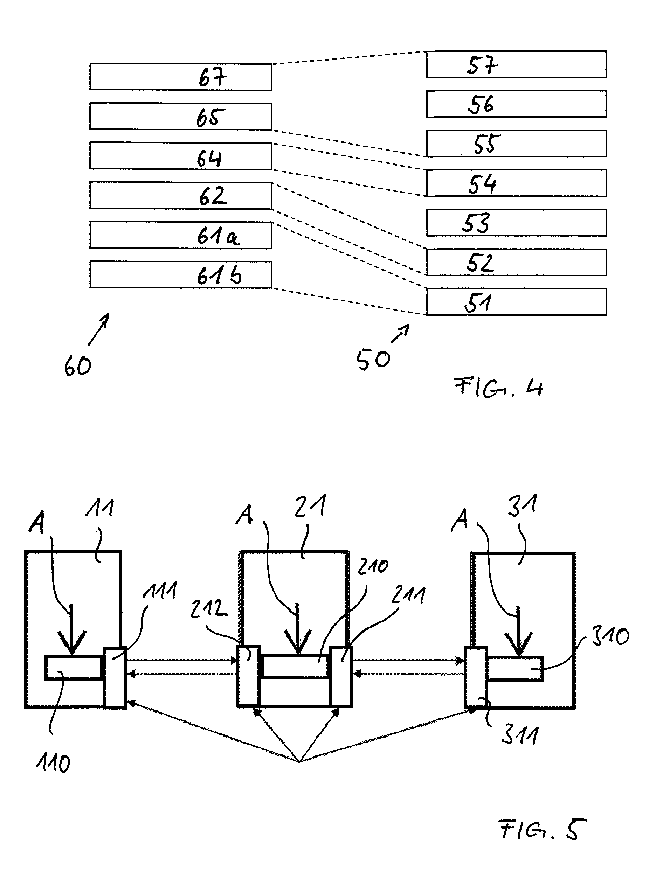

Mit Bezug auf Figur 4 wird nachfolgend ein Punkt-zu-Punkt Protokollstapel 60 entsprechend dem erfindungsgemäßen Verfahren in Bezug zu einem OSI-Referenzmodell mit sieben Schichten oder Layern beschrieben. Grundsätzlich geht das OSI-Referenzmodell 50 von einem Netz mit mehr als zwei Teilnehmern aus, während das erfindungsgemäße Verfahren eine Punkt-zu-Punkt Kommunikation vorsieht. Entsprechend ist der Schichtaufbau nicht deckungsgleich. Anwendungsschicht 57, Darstellungsschicht 56 und Sitzungsschicht 55 wurden zusammengefasst zur Definition der Datenobjekte 67 und dem eigentlichen Kommunikations-Aufruf 65 innerhalb der Gerätesoftware. Hier werden im Wesentlichen die Datenschnittstelle für die eigentliche Applikation sowie die grundsätzlichen Kommunikationsaspekte wie Auf- und Abbau oder Überwachung umgesetzt. Eine echte Darstellungsschicht existiert dabei im Protokollstapel 60 allerdings nicht, da die Schnittstelle zur Applikation für alle Teilnehmer identisch ist und somit keine Aufbereitung der Daten erfolgen muss.

Der Transportschicht 54 im OSI-Referenzmodell 50 entspricht direkt den Routinen zum Füllen bzw. Auslesen der Übertragungspuffer 64. Hier wird auch bestimmt, welche Datenobjekte als nächste übertragen werden müssen, ob beispielsweise auf eine azyklische Datenanforderung (Request) reagiert werden muss.

Eine Vermittlungsschicht 53 entfällt in dem Protokollstapel 60, da es sich nicht um ein Netzwerk, sondern um eine Punkt-zu-Punkt-Verbindung handelt. Eine Sicherungsschicht 52 wird wiederum direkt abgedeckt durch die Sende- und Empfangsroutinen 62. Hier werden die Absicherung der übertragenen bzw. zu übertragenden Daten sowie der korrekte Weitertransport an die entsprechende Bitübertragungsschicht 51 implementiert. Die Bitübertragungsschicht 51 besteht in dem erfindungsgemäßen Verfahren aus zwei Ebenen, einem Hardware Abstraction Layer 61a (HAL), dass die Anpassung an den verwendeten Prozessor vornimmt, sowie der eigentlichen physikalischen Schnittstelle 61b.

Der Kern-Bereich, bestehend aus dem Aufruf der Kommunikationsroutinen 65 und dem Befüllen und Entleeren der Pufferspeicher 64 bleibt stets unverändert, während alle anderen Schichten an die jeweiligen Bedürfnisse angepasst werden können. Der Umfang der Datenobjekt-Schicht 67 wird durch die je nach Gerät unterschiedliche Verwendung der vordefinierten Datenobjekte bestimmt. Der Typ des Kommunikationsverfahrens wird durch die Sende- und Empfangsroutinen 62 bestimmt. Diese legen also fest, ob beispielsweise ein asynchroner Datenaustausch per UART verwendet wird oder ein synchrones Verfahren wie SPI. Durch Austausch der entsprechenden Routinen kann so zwischen den Verfahren gewechselt werden. Alle anderen Komponenten des Systems beleiben erhalten. Über das Hardware Abstraction Layer 61a wird die Anpassung an die tatsächlich verwendete Hardware, das heißt an den Mikrokontroller vorgenommen. Das ermöglicht die Verwendung aller überlagerten Schichten mit unterschiedlichen Mikrokontrollern.

Durch den modularen Aufbau und die weitgehende Anpassbarkeit ist es möglich, die Software allgemeingültig zu erstellen. Das bedeutet, sie wird nur ein Mal programmiert und muss dann nur noch für die Verwendung im jeweiligen Gerät geringfügig konfiguriert werden.

Ein Beispiel ist in der Figur 5 dargestellt. Sowohl bei dem Leistungsschalter 11, als auch bei dem Display 21 und bei dem Gateway 31 wird die gleiche Software für die Kommunikation verwendet. Sie unterscheidet sich nur hinsichtlich ihrer Konfiguration, die in wenigen Schritten auf die Bedürfnisse der einzelnen Geräte abgestimmt werden kann. Der Leistungsschalter 11 hat nur eine Schnittstelle 111 und einen internen Speicher 110. Die Pfeile A verdeutlichen, dass interne Vorgänge der jeweiligen Geräte den gespeicherten Inhalt beeinflussen. Der Leistungsschalter 11 liefert Messwerte und empfängt Parameter-Daten. Das Display 21 weist zwei Schnittstellen 211, 212 und einen Speicher 210 auf. Es empfängt Messwerte vom Leistungsschalter 11, zeigt diese an und reicht sie an das Gateway 31 weiter, empfängt Parameter vom Gateway 31, zeigt diese an und reicht sie an den Leistungsschalter 31 weiter. Das Display 21 kann per Menüsteuerung selbst Daten wie Parameter oder Identifikation von Leistungsschalter 11 und Gateway 31 anfordern. Das Gateway31 hat nur eine Schnittstelle 311 und einen Speicher 310. Es empfängt Messwerte, die vom Leistungsschalter 11 über das Display 21 weitergeleitet werden und sendet Parameter, die vom Display 21 an den Leistungsschalter 11 weitergeleitet werden. All diese Konfigurationen können ohne Programmieraufwand umgesetzt werden, es muss für jedes Gerät lediglich eine Auswahl der benötigten Eigenschaften in den Konfigurationsdateien erfolgen.

Vorteile des erfindungsgemäßen Verfahrens und des erfindungsgemäßen digitalen Übertragungssystems sind die schnelle Aktualisierung wichtiger Daten, erreicht durch eine geeignete Telegrammstruktur, gleichzeitig maximale Flexibilität, erreicht durch die Strukturierung der Daten in Objekten. Dadurch wird eine nahezu beliebige Skalierbarkeit möglich. Durch die Objektstruktur wird eine verbesserte Kompatibilität: erreicht; nicht bekannte Objekte können einfach ignoriert werden, führen aber nicht zu Systemfehlern. Die Systemkosten können vergleichsweise gering gehalten werden, da die Firmware für verschiedene Geräteklassen verwendet werden kann. Darüber hinaus stellt das System keine Anforderung an spezifische Hardware, wie beispielsweise Bustreiber, so dass hier keine Kosten entstehen. Im einfachsten Fall können zwei Mikrokontroller direkt miteinander gekoppelt werden. Die Verwendung ist durch das HAL 61a auf beliebigen Hardware-Plattformen möglich. Eine einfache Anwendung wird durch die Bereitstellung eines Projekt-Templates für die Umsetzung in Schaltgeräten erreicht. Die Entwicklung wird durch ein allgemein verwendbares Kommunikationssystem beschleunigt, das nur noch konfiguriert werden muss. Eine beschleunigte Prüfung erfolgt durch Konfigurieren an Stelle von Programmieren der Kommunikation. Dadurch stehen bekannte Verfahren und Komponenten zur Verfügung und der Prüfablauf wird beschleunigt. Außerdem sinkt die Fehlerwahrscheinlichkeit drastisch, weil das System nicht mehr programmiert wird, sondern die bestehende Firmware nur noch konfiguriert wird. Durch das modulare System (Layer) wird eine gute Wartbarkeit erreicht.

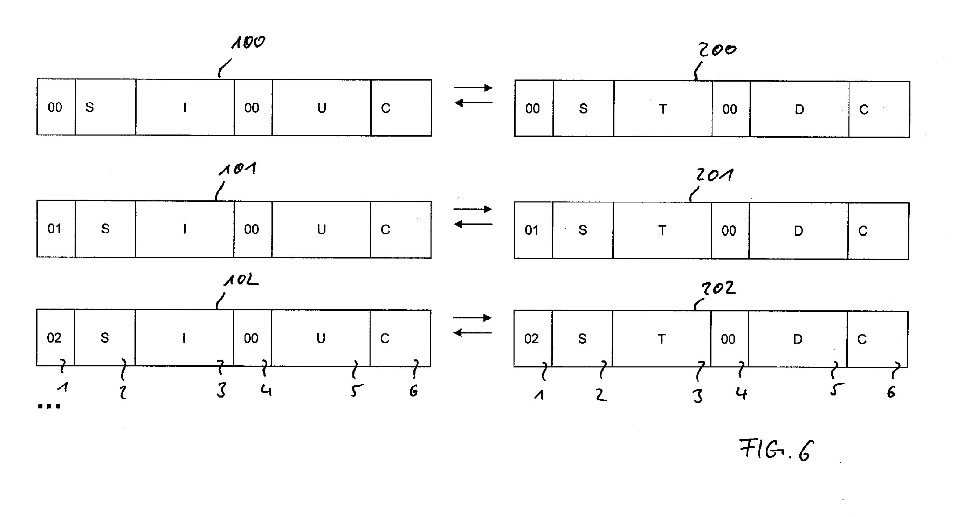

Auf Basis des im Zusammenhang mit der Figur 2 beschriebenen Telegramm-Aufbaus werden nachfolgend drei Fälle der Datenübertragung gemäß der Figuren 6 bis 8 beschrieben. Dabei wird immer von einem Schaltgerät, beispielsweise einem Leistungsschalter, ausgegangen, der mit einem externen Gerät, beispielsweise einem Display kommuniziert. Das externe Gerät wird dabei in der Regel relativ wenige Daten senden. Für die Beispiele wird angenommen, dass es, mit Ausnahme einer Datenanforderung im dritten Fall, nur Zeit- und Datumsinformationen T, D in den Datensegmenten 3, 5 an den Schalter übergibt. Das Schaltgerät sendet die mit 100, 101, 102 etc. gekennzeichneten Telegramme, wobei jedes Inkrement einen neuen Zyklus darstellt. Dementsprechend sind die von dem externen Gerät gesendeten Telegramme mit 200, 201, 202 etc. bezeichnet. Die Datensegmente 1 bis 7 sind lediglich beispielhaft an einigen Telegrammen bezeichnet.

In dem Beispiel gemäß Figur 6 sendet der Leistungsschalter nur zwei Objekte, nämlich Strom I und Spannung U, dargestellt durch die entsprechende Beschriftung der Datenfelder 3, 5. Da alle Daten in einem Zyklus übertragen werden, sehen alle Telegramme 100, 101, 102 identisch aus, mit Ausnahme der fortlaufenden Telegramm-Nummer in dem Identifikations-Segment 1 und der Checksumme in dem Prüfsummensegment 6, die hier jeweils mit C bezeichnet ist. Die übertragenen Werte für den Strom I und die Spannung U können sich natürlich ebenfalls von Zyklus zu Zyklus ändern. Die Statusdaten sind mit S bezeichnet und werden in jedem Zyklus in dem Statusdaten-Segment 2 übertragen. In dem Hinweis-Segment 4 wird jeweils ein Nullwert 00 gesendet, was bedeutet, dass keine azyklischen Daten abgerufen werden oder übertragen werden.

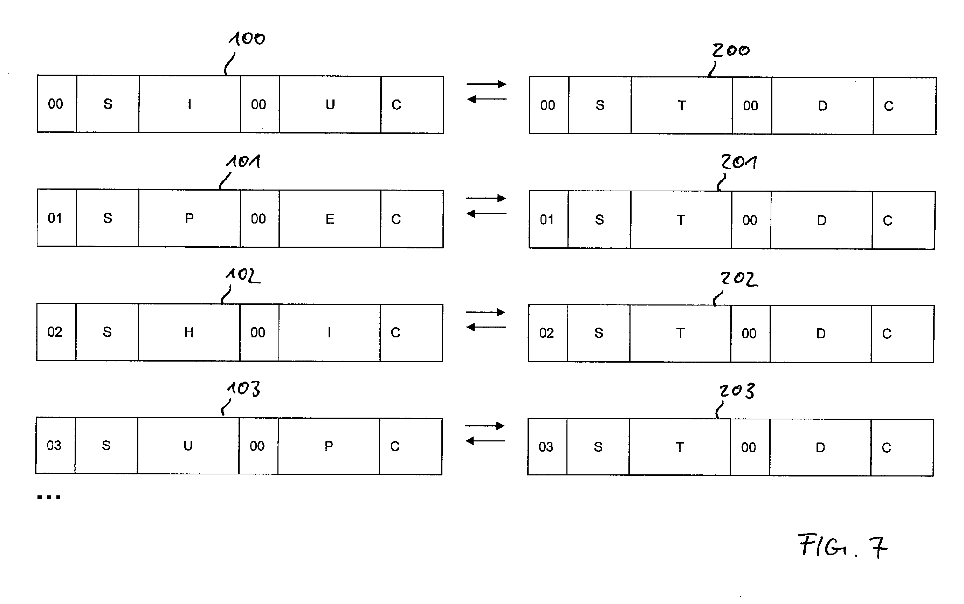

In der Figur 7 ist ein Fallbeispiel entsprechend Figur 6 dargestellt, jedoch mit einem höheren Datenaufkommen. Der Leistungsschalter sendet fünf Objekte, nämlich Strom I, Spannung U, Leistung P, Energie E und Temperatur H. Es können also nicht mehr alle Daten in einem Zyklus übertragen werden. Diese werden auf die Datensegmente 3, 5 mehrerer Telegramme 100, 101, 102 aufgeteilt und wiederholen sich dann ab dem Objekt in dem zweiten Datensegment 5 in Telegramm 102, also in dem dritten Zyklus. In dem Hinweis-Segment 4 wird jeweils ein Nullwert 00 gesendet, was bedeutet, dass keine azyklischen Daten abgerufen werden oder übertragen werden.

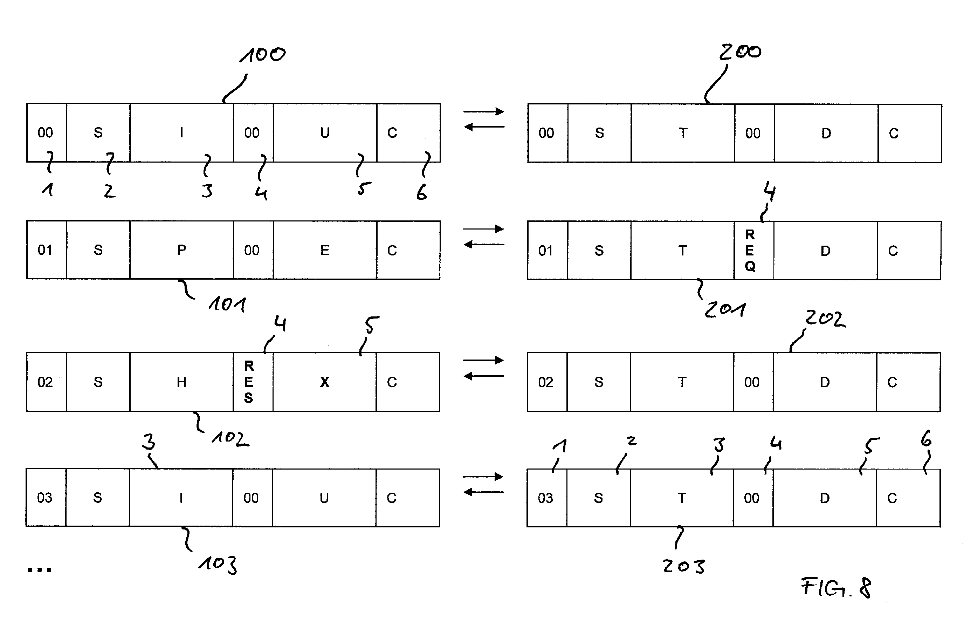

In der Figur 8 ist ein Fallbeispiel entsprechend Figur 7 dargestellt, also mit erhöhtem Datenaufkommen, wobei zusätzlich eine azyklische Datenanforderung an den Leistungsschalter gestellt wird. Dazu sendet das externe Gerät in dem zweiten Telegramm 201 in dem Hinweissegment 4 die Datenanforderung REQ, beispielsweise nach dem Typcode X des Schaltgeräts, welche dieses im dritten Zyklus mit dem Telegramm 102 beantwortet, indem an Stelle der eigentlich fälligen Stromwerte I der Typcode X in das zweite Datenfeld 5 geschrieben wird und eine Antwortkennung RES in dem Hinweissegment 4 gesetzt wird. Dadurch verschiebt sich das Senden der Ströme I auf das erste Datenobjekt im ersten Datensegment 3 in dem vierten Telegramm 103 im vierten Zyklus. Falls die Notwendigkeit besteht, die Datenanforderung REQ im Hinweissegment 4 des zweiten Telegramms 201 zu spezifizieren, so würde hierfür das zweite Datensegment 5 dieses Telegramms genutzt.

## Patentansprüche

1. Verfahren zur Datenübertragung in einem digitalen Übertragungssystem mit mindestens zwei Teilnehmern, wobei die mindestens zwei Teilnehmer über eine Datenverbindung verbunden werden und wobei ein Protokollstapel durch Prozessormittel der Teilnehmer verarbeitet wird, wobei mittels einer Kommunikations-Aufruf-Routine in einer Sitzungsschicht des Protokollstapels der Austausch der Daten zwischen den mindestens zwei Teilnehmern über die Datenverbindung organisiert wird und eine Schreib-Lese-Routine zum Befüllen und/oder Auslesen der Pufferspeicher in einer Transportschicht des Protokollstapels die Daten einer Abfolge von Telegrammen zuordnet und wobei in den Telegrammen mindestens zwei Vorrangebenen für den Transport von Daten unterschiedlicher Vorrangstufen definiert werden.

2. Verfahren nach Anspruch 1, **dadurch gekennzeichnet, dass** jedes Telegramm in eine Mehrzahl von Segmenten unterteilt wird, wobei mindestens ein Statusdaten-Segment für Daten mit höchster Vorrangstufe definiert wird und mindestens ein Datenfeld-Segment für Daten anderer Vorrangstufen definiert wird.

3. Verfahren nach Anspruch 2, **dadurch gekennzeichnet, dass** mit jedem Datenfeld-Segment ein Datenobjekt übertragen wird, wobei als Datenobjekt jeweils Daten eines bestimmten Typs zusammengefasst werden.

4. Verfahren nach einem der Ansprüche 2 oder 3, **dadurch gekennzeichnet, dass** zyklisch zu übertragende Daten für die Übertragung in mindestens ein erstes Datenfeld-Segment und ein zweites Datenfeld-Segment je Telegramm eingetragen werden.

5. Verfahren nach einem der Ansprüche 2 bis 4, **dadurch gekennzeichnet, dass** mindestens einem Datenfeld-Segment ein Hinweissegment zugeordnet wird, wobei durch das Hinweissegment eine Information darüber übertragen wird, ob eine Anforderung azyklischer Daten vorliegt und/oder ob das zugeordnete Datenfeld-Segment angeforderte azyklische Daten beinhaltet.

6. Verfahren nach einem der Ansprüche 3 bis 5, **dadurch gekennzeichnet, dass** in einer Schicht des Protokollstapels oberhalb der Kommunikations-Aufruf-Routine die Datenobjekte definiert werden.

7. Verfahren nach einem der Ansprüche 3 bis 6, **dadurch gekennzeichnet, dass** durch die Prozessormittel der mindestens zwei Teilnehmer identische Protokollstapel verarbeitet werden, mit Ausnahme einer Definition der Datenobjekte, welche in einem Konfigurationsschritt in Abhängigkeit von Eigenschaften des jeweiligen Teilnehmers durchgeführt wird.

8. Teilnehmer zur Verwendung in einem digitalen Übertragungssystem mit mindestens einem weiteren Teilnehmer, aufweisend:
Kommunikationsmittel zum Verbinden des Teilnehmers mit dem mindestens einen weiteren Teilnehmer über eine Datenverbindung, Pufferspeicher zur Speicherung von Daten, Prozessormittel zur Verarbeitung eines Protokollstapels, wobei eine Kommunikations-Aufruf-Routine eine Sitzungsschicht des Protokollstapels zum organisierten Austausch der Daten zwischen dem Teilnehmer und dem mindestens einen weiteren Teilnehmer über die Datenverbindung bildet und eine Schreib-Lese-Routine zum Befüllen und/oder Auslesen der Pufferspeicher in einer Transportschicht des Protokollstapels vorgesehen ist, wobei die Schreib-Lese-Routine die Daten einer Abfolge von Telegrammen zuordnet und wobei jedes Telegramm mindestens zwei Vorrangebenen für Daten unterschiedlicher Vorrangstufen aufweist.

9. Teilnehmer nach Anspruch 8, **dadurch gekennzeichnet, dass** jedes Telegramm in eine Mehrzahl von Segmenten unterteilt ist, wobei mindestens ein Statusdaten-Segment für Daten mit höchster Vorrangstufe vorgesehen ist und mindestens ein Datenfeld-Segment für Daten anderer Vorrangstufen vorgesehen ist.

10. Teilnehmer nach Anspruch 9, **dadurch gekennzeichnet, dass** jedes Datenfeld-Segment zur Übertragung eines Datenobjekts vorgesehen ist, wobei in einem Datenobjekt jeweils Daten eines bestimmten Typs zusammengefasst sind.

11. Teilnehmer nach Anspruch 10, **dadurch gekennzeichnet, dass** eine Definition der Datenobjekte eine Schicht des Protokollstapels oberhalb der Kommunikations-Aufruf Routine bildet.

12. Teilnehmer nach einem der Ansprüche 9 bis 11, **dadurch gekennzeichnet, dass** mindestens ein erstes Datenfeld-Segment und ein zweites Datenfeld-Segment je Telegramm für die Übertragung zyklisch zu übertragender Daten vorgesehen sind.

13. Teilnehmer nach einem der Ansprüche 9 bis 12, **dadurch gekennzeichnet, dass** mindestens einem Datenfeld-Segment ein Hinweissegment zugeordnet ist, wobei das Hinweissegment zur Übertragung einer Information darüber vorgesehen ist, ob eine Anforderung azyklischer Daten vorliegt und/oder ob das zugeordnete Datenfeld-Segment angeforderte azyklische Daten beinhaltet.

14. Digitales Übertragungssystem mit mindestens zwei Teilnehmern nach einem der Ansprüche 8 bis 13, **dadurch gekennzeichnet, dass** die Prozessormittel der mindestens zwei Teilnehmer identische Protokollstapel verarbeiten, mit Ausnahme einer Konfiguration, welche in Abhängigkeit von Eigenschaften des Teilnehmers durchführbar ist.

15. Digitales Übertragungssystem nach Anspruch 14, **dadurch gekennzeichnet, dass** die Konfiguration eine Definition von Datenobjekten des Teilnehmers umfasst.
